# EUROPÄISCHE PATENTANMELDUNG

(11) **EP 0 676 123 A1**
(43) Veröffentlichungstag der Anmeldung: **11.10.1995**
(21) Anmeldenummer: 95104292.8
(22) Anmeldetag: 23.03.1995
(51) Int. Cl.: A01B 71/06, A01D 41/14

(54) **Vorrichtung zum Anschluss einer Ausrüstung an eine Maschine, insbesondere eines Erntevorsatzes an eine Erntemaschine**

(30) Priorität: 08.04.1994 DE 4412115
(71) Anmelder: DEERE & COMPANY, Moline, Illinois 61265 (US)
(72) Erfinder: Barzen, Rainer, D-54516 Flussbach (DE); Mies, Dieter, D-53881 Euskirchen (DE); Dannigkeit, Helmut, D-66484 Battweiler (DE)
(74) Vertreter: Feldmann, Bernhard

(57) **Zusammenfassung**

Es wird eine Vorrichtung zum Anschluß einer Ausrüstung an eine Maschine, insbesondere eines Erntevorsatzes an eine Erntemaschine, mit einer eine erste und eine zweite Kupplungshälfte (18,98) enthaltenden Antriebsverbindung für jeweils zusammengehörige elektrische, hydraulische, pneumatische und/oder mechanische Anschlüsse (38,40), und einer Arretiervorrichtung zur Halterung der Ausrüstung an der Maschine vorgeschlagen, bei der die Kupplungselemente in einem Kupplungshälftenpaar zusammengefaßt sind und bei der eine Trennung der Lasttragefunktion von der Antriebsfunktion ausgeführt wird.

## Beschreibung

Die Erfindung betrifft eine Vorrichtung zum Anschluß einer Ausrüstung an eine Maschine, insbesondere eines Erntevorsatzes an eine Erntemaschine, mit einer eine erste und eine zweite Kupplungshälfte enthaltenden Antriebsverbindung für jeweils zusammengehörige elektrische, hydraulische, pneumatische und/oder mechanische Anschlüsse, und einer Arretiervorrichtung zur Halterung der Ausrüstung an der Maschine.

Vorrichtungen zum Verbinden zweier Kupplungshälften mit jeweils einem oder mehreren elektrischen, hydraulischen oder sonstigen Anschlüssen sind aus Anwendungsgebieten bekannt, in denen eine treibende Maschine mit einer zu treibenden Ausrüstung verbunden werden soll. Solche Fälle sind beim Anschluß eines Anhängers an ein Fahrzeug, eines Frontladers an einen Ackerschlepper, eines Räumschildes an ein Räumfahrzeug und dergleichen gegeben.

Diese bekannten Vorrichtungen sind vielfach insofern nachteilig, als die Verbindung jeweils durch ein genaues Heranfahren der Maschine an die Ausrüstung erfolgen muß, was zuweilen sehr schwer ist; dies ist beispielsweise der Fall bei der Vorrichtung nach der DE-OS-30 09 284, der DE-OS-29 00 866 und der EP-A1-0 434 472.

Andererseits offenbart die DE-OS-26 40 840 eine Vorrichtung zum Anschluß eines Frontladerwerkzeugs an eine Laderschwinge, mit einer im wesentlichen von einem Hydraulikzylinder gebildeten Arretiervorrichtung, mit deren Hilfe zwei Bolzen durch entsprechende Ösen geschoben werden, die das Frontladerwerkzeug an der Laderschwinge festlegen. Abhängig von der Stellung der Bolzen bzw. des Hydraulikzylinders werden auch die inneren Kupplungsteile von Hydraulikkupplungen in die Hülsen, also die äußeren Kupplungsteile, über ein von dem Hydraulikzylinder über die Bolzen betätigtes Gestänge in Eingriff gebracht und in der Eingriffsstellung gehalten.

Dieser Vorrichtung haftet der Nachteil an, daß die Bolzen ständig der mechanischen Last der Verbindung zwischen dem Frontladerwerkzeug und der Laderschwinge ausgesetzt sind und diese Belastung teilweise auf die Hydraulikkupplungen übertragen, was die Zuverlässigkeit der Verbindung verringert. Jede Verwindung des Frontladerwerkzeugs führt auch zu einer Belastung der Hydraulikkupplungen. Darüberhinaus ist eine sichere Verbindung der Hydraulikkupplungen dann nicht gewährleistet, wenn ein oder beide Bolzen nicht vollständig einrasten, z. B. wegen Verschmutzung, Verformung oder dergl.

Aus der DE-OS-29 00 866 geht ebenfalls eine Vorrichtung zum Anschluß eines Geräts an das Heck eines Ackerschleppers hervor, bei der eine erste Kupplungshälfte mit elektrischen und hydraulischen Anschlüssen, sowie mit einem Wellendurchtrieb starr an dem Ackerschlepper und eine zweite entsprechend bestückte Kupplungshälfte beweglich einerseits mit der ersten Kupplungshälfte und andererseits mit einem Gerät verbindbar ausgebildet und angeordnet ist.

Auch bei dieser Vorrichtung verläuft die gesamte aus der Zugkraft des Ackerschleppers herrührende Kraft durch die Kupplungsplatten bzw. - hälften und beeinträchtigt somit deren Verbindungsstellen, was zu Kontaktunterbrechungen und Undichtigkeiten führen kann.

Schließlich offenbart die DE-OS-2 111 227 einen Mähdrescher mit einer fernsteuerbaren Vorrichtung zum Anschließen eines Schneidwerks an einen Mähdrescher. Zu diesem Zweck sind zwei hakenförmige Riegel, eine Klauenkupplung und eine Hydraulikkupplung vorgesehen, deren jeweils einer Teil verstellbar an einem Schrägförderer und deren jeweils anderer Teil ortsfest an dem Schneidwerk angebracht sind. Die Verstellung der Riegel wie auch der jeweiligen Kupplungsteile erfolgt über mechanisch miteinander verbundene Hebel und wird von einem Hydraulikmotor durchgeführt. Zur Steuerung der Bewegungsfolge der jeweiligen Hebel sind Langlöcher und Kurvenbahnen vorgesehen. Während der eine Teil der Klauenkupplung mittels einer Schaltgabel über eine horizontale Bewegung in bzw. außer Eingriff mit dem anderen Teil gebracht wird, erfolgt die Verbindung der beiden Hydraulikkupplungsteile in vertikaler Richtung, wozu das Schneidwerk einen Deckel enthält, in den lediglich die einen Hälften der Hydraulikkupplungen eingesetzt sind.

Dieser Mähdrescher ist insofern nachteilig, als das Vorhandensein zweier Kupplungsstellen einen hohen Kostenaufwand hervorruft und hohe Anforderungen an die Paßgenauigkeit stellt. Zudem können aufgrund des Abstands zwischen den beiden Kupplungsstellen Verspannungen bei angehängtem Schneidwerk auftreten, die zu einer Beeinträchtigung im Bewegungsablauf führen können. Die Verwendung einer unter Federkraft eingerückten Klauenkupplung setzt eine aufwendige Lagerung voraus, wenn hohe Drehmomente übertragen werden sollen. Die zur Bewegungssteuerung verwendeten Längsschlitze unterliegen Verschleiß und funktionieren schließlich ungenau. Bei Relativbewegungen zwischen dem Schneidwerk und dem Schrägförderer kann die Dichtigkeit der Hydraulikkupplung leiden. Schließlich erfordert diese Vorrichtung zum Verbinden des Schneidwerks mit dem Mähdrescher eine spezielle Ausbildung des Schneidwerks, die einen nachträglichen Anbau nicht mehr zuläßt.

Trotz dieser Vielzahl an bekannten Vorrichtungen ist es bei Erntemaschinen wie Mähdreschern, Feldhäckslern, Mähgeräten, Fressen und dergleichen bisher in der Praxis nicht bekannt geworden, einen Erntevorsatz mit automatisch anschließbaren Schnellverbindungselementen anzuhängen. Dies ist um so erstaunlicher, als bei derartigen Erntemaschinen vielfach Erntebergungsvorsätze verwendet werden, die die maximal zulässige Transportbreite überschreiten und deshalb auf einem Wagen transportiert werden müssen; hierzu müssen die jeweiligen Erntebergungsvorsätze jedoch ab- und angebaut werden, was einen nicht unerheblichen Zeitverlust bedeuten kann. Vielmehr wird ein in der Mitte teilbares Schneidwerk vorgeschlagen, dessen Hälften z. B. nach der EP-A1-0 540 882 um eine vertikale oder nach der DE-OS-40 30 066 um eine oder mehrere horizontale Achsen zusammengeklappt werden.

Derartige Schneidwerke sind nur unter einem hohen Kostenaufwand herstellbar und bieten eine Lösung nur für solche, die nicht breiter als ca. fünf Meter sind; heutzutage werden jedoch bereits Schneidwerke und dergleichen Erntebergungsvorsätze mit einer Breite von 8,50 m verwendet.

Die DE-AS-14 82 818, DE-PS-22 63 839 und die FR-PS-1.544.640 zeigen beispielhaft, wie eine Ausrüstung, z. B. ein Schneidwerk, an einer Maschine, z. B. einem Mähdrescher, angebracht und dort ferngesteuert in seiner Lage gesichert werden kann.

Die der Erfindung zugrunde liegende Aufgabe wird darin gesehen, eine Vorrichtung zum Anschluß einer Ausrüstung an eine Maschine vorzuschlagen, deren Antriebsverbindungen nicht oder unwesentlich von den Haltekräften zwischen der Ausrüstung und der Maschine beeinflußt werden und die eine zielsichere und zuverlässige Verbindung zweier die jeweiligen Antriebsverbindungen herstellender Kupplungshälften gewährleistet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird die Belastung aus der Tragfunktion der Maschine nicht auf die hydraulische, elektrische, pneumatische und/oder mechanische Verbindung zwischen beiden Kupplungshälften übertragen und somit deren Funktion, Sicherheit, Dichtung und Zuverlässigkeit auch nicht beeinträchtigt. Auch bei einer Störung in der Verriegelung der Ausrüstung mit der Maschine, die evtl. manuel behoben werden kann, erfolgt eine Verbindung der Kupplungshälften. Die Verwendung von Ausrichtmitteln, z. B. konusförmigen Zapfen und Hülsen sorgt auch bei nicht einwandfrei zueinander ausgerichteten Kupplungshälften für eine funktionstüchtige Verbindung.

Der Vorteil der Lehre nach Patentanspruch 2 besteht darin, daß danach auch ein Antrieb mittels einer Welle und einer Hülse, Muffe oder dergleichen übertragen werden kann und die Möglichkeit, Verbindungen herzustellen, nicht mehr auf Hydraulik-, Elektrik- oder Pneumatikanschlüsse begrenzt ist. Insbesondere dann, wenn hohe Leistungen übertragen werden müssen.

Eine lineare Führung einer Kupplungshälfte zu der zweiten kann grundsätzlich mit Lenkern, Kurvenbahnen und dergleichen erfolgen. Hinsichtlich der Stabilität und der Einfachheit in der Ausführung ist aber von Vorteil, die Führung mittels eines Rohrs teleskopisch vorzunehmen. Bei der Verwendung insbesondere eines Vierkantrohrs ergibt sich die Verdrehsicherung automatisch aus dem jeweilien Profil.

Ein derart verwendetes Rohr hat auch den Vorteil, daß es in seinem Innenraum Raum für die insbesondere gleit- oder rollengelagerte Aufnahme einer Antriebswelle oder einer Antriebshülse bietet. Hierdurch ergibt sich neben der sicheren Aufnahme des Lagers auch ein Schutz für die Welle oder Hülse gegen äußere Krafteinwirkungen.

Ausrichtmittel können in vielfältiger Weise, z. B. mit Bahnführung, mit Lenkern und dergleichen ausgeführt werden. Eine einfach zu verwirklichende Ausrichtung mit sicherem Halt ergibt sich aus der Verwendung von Zentrierstiften, die in Zentrierbüchsen einfügbar sind.

Anstelle der Verstellung der ersten Kupplungshälfte mittels eines Bowdenzugs, eines Gestänges oder Hebeln, ist es für eine Fernsteuerung angebracht, einen Motor beliebiger Bauart, z. B. einen Elektromotor, einen Hydraulikzylinder, einen Pneumatikmotor z. B. -zylinder heranzuziehen.

Zur Übertragung der Bewegung des Motors, eines Bowdenzugs oder eines Gestänges auf die erste Kupplungshälfte eignet sich ein Hebel- oder Scherenhubgestänge besonders, weil unter Ausnutzung der Hebelverhältnisse die erforderlichen Kräfte gering gehalten werden können.

Andererseits kann die unmittelbare Verwendung eines insbesondere doppeltwirkenden Hydraulikzylinders, dessen Kolben das Rohr für die teleskopische Führung und dessen Zylinder einen Teil der ersten Kupplungshälfte darstellt, in Betracht gezogen werden.

Die Anschlüsse in den beiden Kupplungsplatten werden spannungs- bzw. drucklos miteinander verbunden, wenn ein Gestänge, Nocken, Schalter oder dergleichen vorgesehen sind, die abhängig von der Stellung der ersten, d. h. beweglichen Kupplungshälfte den Energiefluß zuläßt oder sperrt. Insbesondere kann Druck in der Hydraulikleitung erst dann aufgebaut werden, wenn die Kupplungen geschlossen sind. Aber auch bei Elektroverbindungen können auf diese Weise Abreißfunken vermieden werden, die in unmittelbarer Nähe zu trockenem Stroh und Spreu eine Brandgefahr darstellen könnten.

Die sichere Verbindung beider Kupplungshälften während des Betriebs, d. h. auch beim Einwirken von Torsions-, Biege- und Zugkräften wird durch die Verwendung wenigstens einer Verriegelungsvorrichtung hergestellt. Diese kann Bügel, Haken, Hydraulikmotoren, Magnetplatten oder dergleichen enthalten.

Zum Öffnen und Schließen der Verriegelungsvorrichtung wird anstatt separat zu bedienender Mittel vorgeschlagen, die Bewegung der ersten Kupplungshälfte zur Steuerung auszunutzen, was über in Leerwegen bewegte Nocken zu erreichen ist.

Grundsätzlich kann die zweite Kupplungshälfte starr, wenn auch einstellbar - an der Ausrüstung angebracht sein; ist aber eine Relativbewegung der Ausrüstung gegenüber der Maschine auf einem Kreisbogen um einen Mittenzapfen möglich, kann die zweite Kupplungshälfte dennoch starr an der ersten Kupplungshälfte haften, wenn sie gegenüber der Ausrüstung beweglich, d. h. vorzugsweise auf einem Kreisbogen beweglich geführt ist, was z. B. mit Hilfe einer Kurvenbahn erreicht werden kann.

Damit bei einer gegenüber der Maschine beweglichen Ausrüstung eine Neutralstellung der zweiten Kupplungshälfte für den Ankuppelvorgang gegeben ist, sind Rastmittel und Halteelemente vorgesehen, mit deren Hilfe die zweite Kupplungshälfte einwandfrei positioniert werden kann.

Wenn die zweite Kupplungshälfte in bezug auf die Ausrüstung in verschiedener Weise eingestellt werden kann, ist es stets möglich, deren einwandfreie Verbindung mit der ersten Kupplungshälfte zu gewährleisten.

In der Zeichnung ist ein nachfolgend näher beschriebenes Ausführungsbeispiel der Erfindung dargestellt. Es zeigt:
- Fig. 1: einen ersten Teil einer Vorrichtung zum Anschluß einer Ausrüstung an eine Maschine in Seitenansicht,
- Fig. 2: den ersten Teil in Draufsicht,
- Fig. 3: einen in Figur 1 mit einem Kreis markierten Ausschnitt in detaillierter Darstellung,
- Fig. 4: einen zweiten Teil der Vorrichtung in Seitenansicht und
- Fig. 5: den zweiten Teil in Vorderansicht.

Eine Vorrichtung 10 zum Anschluß einer Ausrüstung an eine Maschine - im folgenden Vorrichtung genannt - setzt sich aus einem ersten, maschinenseitigen Teil 12 und einem zweiten, ausrüstungsseitigen Teil 14 zusammen, die für einen Betrieb miteinander verbindbar und für einen Außerbetriebszustand, insbesondere für den Transport, voneinander trennbar sind.

Selbstverständlich kann der erste Teil 12 auch an der Ausrüstung und der zweite Teil 14 an der Maschine vorgesehen sein.

Unter der nicht gezeigten Ausrüstung kann jeder Zusatz zu einer Maschine oder gar eine zweite Maschine verstanden werden, die mit der Maschine betriebsmäßig verbunden werden soll. Im Einzelfall kann dies ein Schneidwerk, ein Maisgebiß, ein Maispflücker, eine Pick-Up, ein Schneeräumschild, eine Schneefräse, ein Frontladerwerkzeug, ein Baggerwerkzeug oder dergleichen sein.

Die ebenfalls nicht dargestellte Maschine kann z. B. eine Erntemaschine, insbesondere ein Mähdrescher, ein Feldhäcksler, ein Mähgerät, ein Ackerschlepper, eine Baumaschine, ein komunales Fahrzeug oder dergleichen sein.

Mittels der Vorrichtung 10 ist es möglich, die Ausrüstung mit der Maschine zu verbinden, ohne daß hierzu ein unmittelbarer manueller Eingriff erforderlich wäre.

Der erste Teil 12 besteht hauptsächlich aus einem Träger 16 und einer ersten Kupplungshälfte 18. Darüberhinaus ist ein Gestänge 20 und ein Motor 22 vorgesehen.

Der Träger 16 setzt sich in diesem Ausführungsbeispiel aus einer z. B. an einen Schrägförderer eines Mähdreschers anzubringenden Konsole 24 und einem Rohr 26 zusammen, die starr miteinander verbunden sind. Die Konsole 24 weist an ihrem oberen Ende eine Gabel 28 auf, die der schwenkbaren Aufnahme des Motors 22 dient. Das Rohr 26 kann sowohl rund wie auch unrund, z. B. oval, quadratisch oder rechteckig oder sechseckig ausgebildet sein und weist eine nicht unerhebliche Länge auf, die der mittelbaren Führung der ersten Kupplungshälfte 18 dient. Schließlich sind an den Träger 16 auf beiden Seiten des Rohrs 26 jeweils eine Lasche 30 mit einer Öffnung, an der das Gestänge 20 schwenkbar angebracht werden kann, und verschiedene Löcher zum Befestigen eines Ventils 32 in der Art eines Hydraulikventils vorgesehen.

Die erste Kupplungshälfte 18 wird von einer Platte 34 und einem Rohr 36 gebildet, die ebenfalls starr miteinander verbunden sind.

Die Platte 34 ist von mehreren Ausnehmungen durchdrungen, in denen erste Hälften, insbesondere die Hülsen von Hydraulikkupplungen 38 und Elektrosteckern 40, aufgenommen und gehalten werden. Außerdem weist die Platte 34 im Eintrittsbereich des Rohrs 36 eine dessen Außenform entsprechende Öffnung für eine Welle 42 auf, die später beschrieben wird. Am unteren Ende der Platte 34 ist schließlich ein Kontaktschalter 44 vorgesehen, von dem aus ein Stößel 46 in die Richtung zu dem zweiten Teil 14 ragt.

An der der Konsole 24 zugewandten Fläche der Platte 34 sind ebenfalls beiderseits des Rohrs 36 Laschen 48 mit Öffnungen vorgesehen, in denen das Gestänge 20 schwenkbar aufgenommen werden kann. Darüberhinaus befinden sich im Bereich dieser Laschen 48, aber senkrecht zu diesen verlaufend, dritte Laschen 50, an denen eine Verriegelungsvorrichtung 52 schwenkbar gehalten ist.

Schließlich befinden sich auf der dem zweiten Teil 14 zugelegenen Seite der Platte 34 zwei Ausrichtmittel 54 in der Art und als Teil von Zentrierbüchsen.

Das Rohr 36 entspricht in seiner Länge im wesentlichen dem Rohr 26 und ist auf diesem teleskopisch gelagert, so daß sein Innenquerschnitt nahezu gleich dem Außenquerschnitt des Rohrs 26 ist. Selbstverständlich vorhandene Schmiervorrichtungen sind nicht gezeigt. Sollten die beiden Rohre 26, 36 einen unrunden Querschnitt haben, lagern sie drehfest aufeinander.

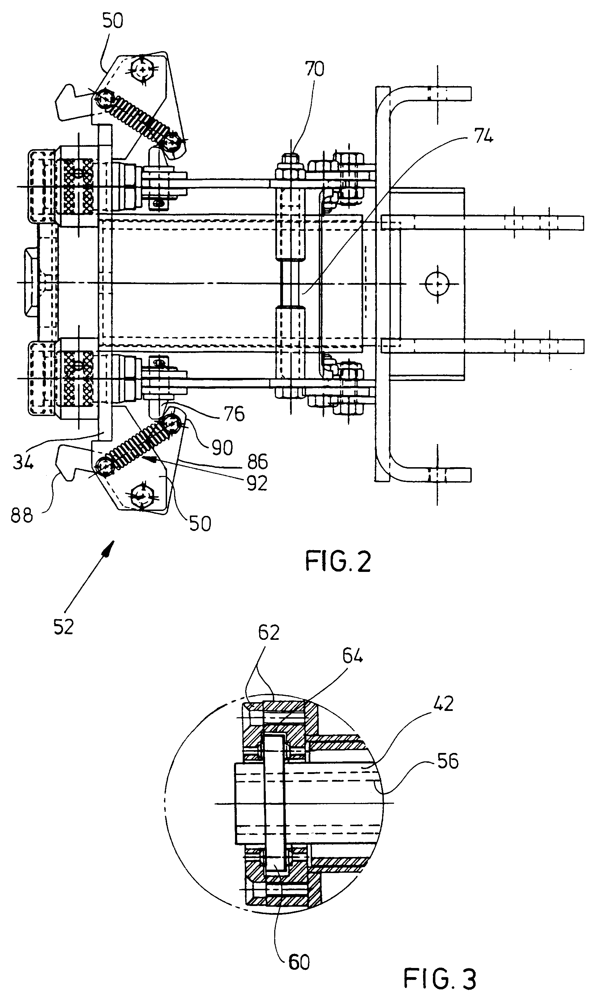

Aus Figur 3 geht hervor, wie die Welle 42 in der Platte 34 gelagert und sich konzentrisch durch das Rohr 26 erstreckend gehalten ist. Danach ist die Welle 42 hohl ausgebildet und an ihrer Innenumfangsfläche mit einem Vielzahnprofil 56 versehen. Dieses Vielzahnprofil 56 eignet sich zur Aufnahme einer auf der Maschine vorgesehenen, nicht gezeigten Antriebswelle einerseits und zur Aufnahme eines entsprechend profilierten Stummels 58 auf dem zweiten Teil 14 andererseits. Somit überträgt die Welle 42 einen mechanischen Antrieb von der Maschine auf die Ausrüstung. Auf der Außenfläche der Welle 42 befindet sich eine Ringschulter 60.

An die dem zweiten Teil 14 zugelegene Seite der Platte 34 sind zwei Ringe 62 angeflanscht, die einen Ringraum 64 begrenzen, in dem die Ringschulter 60 drehbar aufgenommen werden kann. Je nach den vorliegenden Umständen kann zwischen der Ringschulter 60 und dem Ringraum 64 auch ein Rollen- oder Nadellager vorgesehen werden; normalerweise reicht es aber aus, wenn die Ringschulter 60 in Fett in dem Ringraum 64 in der Art eines Gleitlagers dreht. Die Welle 42 ist mittels der beiden Ringe 62 sowohl axial wie auch radial festgelegt und erstreckt sich konzentrisch so weit wie nötig durch den Innenraum der beiden Rohre 26, 36.

Es ist somit ersichtlich, daß die erste Kupplungshälfte 18 entlang der zusammenfallenden Mittenachsen der Rohre 26, 36 zu bzw. von der Konsole 24 weg bewegbar ist.

Das Gestänge 20 erstreckt sich gemäß der Darstellung in Figur 2 in gleicher Ausbildung zu beiden Seiten der Rohre 26, 36 und ist in diesem Ausführungsbeispiel scherenhubartig ausgebildet. Das Gestänge 20 enthält zwei L-förmige und somit zweischenklige Hebel 66, deren kurze, obere Schenkel 68 endseitig über eine Achse 70 und im Anschlußpunkt an die langen Schenkel 72 über eine Spange 74 jeweils starr miteinander verbunden sind. Jeder lange, untere Schenkel 72 ist endseitig schwenkbar in den Laschen 48 aufgenommen, wozu jeweils ein Bolzen 76 in einer Langlochführung 78 vorgesehen ist. Im Bereich der Spange 74 greifen auf jeder Seite an den Hebeln 66 jeweils mittels nicht näher bezeichneter Schrauben und Öffnungen Streben 80 mit einem Ende an, die mit ihrem anderen Ende schwenkbar in den Laschen 30 der Konsole 24 gehalten sind.

Dementsprechend bewirkt eine Bewegung des Gestänges 20, daß sich die Spange 74 radial nach innen bewegt und somit eine Spreizung des Gestänges 20 und eine Verlagerung des Rohrs 36 weg von der Konsole 24 hervorruft.

In einer alternativen Ausführungsform könnte auch lediglich ein zweiarmiger Hebel in der Art einer Schaltgabel vorgesehen sein, der einenends beaufschlagt und anderenends an dem Rohr 36 in axialer Richtung zur Anlage gebracht wird.

Nach einer weiteren ebenfalls nicht gezeigten Ausführungsform könnten beide Rohre 26, 36 als ein doppeltwirkender Hydraulikmotor ausgebildet sein und sich ohne jegliches Gestänge aufeinander abstützen und bewegen.

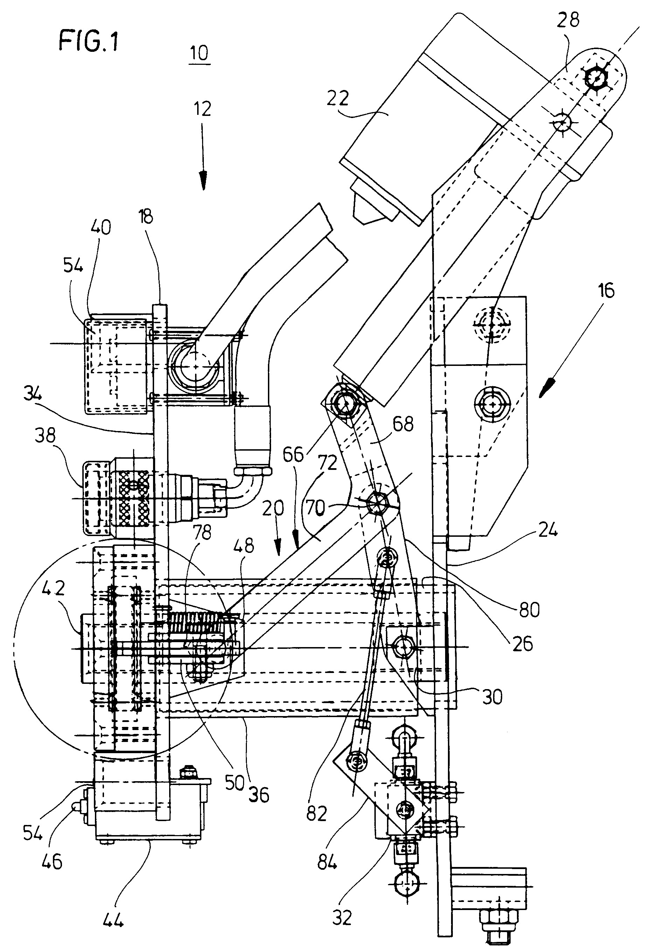

Der Motor 22 ist in diesem Ausführungsbeispiel als ein Elektromotor dargestellt, könnte aber auch als Hydraulik- oder Pneumatikmotor ausgebildet sein - jedenfalls handelt es sich um einen Linearmotor. Der Motor 22 ist einenends schwenkbar in der Gabel 28 und anderenends schwenkbar auf der Achse 70 aufgenommen. Es ist insbesondere mit Blick auf Figur 1 ersichtlich, daß ein Ausfahren des Motors 22 eine radial nach innen gerichtete Bewegung, d. h. Spreizung des Gestänges 20 bewirkt, so daß sich die Kupplungshälfte 18 auf den zweiten Teil 14 zubewegt.

Die Steuerung des Motors 22 kann sowohl manuell wie auch automatisch erfolgen. Anstatt des Motors 22 könnte auch ein bowdenzugbetätigtes Gestänge vorgesehen werden.

An der in Figur 1 dem Betrachter zugelegenen Strebe 80 greift ein Ende eines als Stange 82 ausgebildeten Verbindungsmittels an, deren anderes Ende schwenkbar mit einem Stellhebel 84 des Ventils 32 in Verbindung steht. Auf diese Weise wird der Durchfluß von Hydraulikflüssigkeit durch das Ventil 32 hin zu der oder den Hydraulikkupplungen 38 unterbrochen, wenn das Gestänge 20 in eine beide Teile 12, 14 der Vorrichtung 10 trennende Stellung gebracht wird. Anstatt des Ventils 32 kann auch ein Pneumatikventil zum Sperren eines Druckluftstroms oder ein Elektroschalter zur Unterbrechung der Stromzufuhr vorgesehen werden, wenn diese in dem einen oder anderen Fall zu dem zweiten Teil 14 übertragen werden sollen.

Die dritten Laschen 50 sind auf jeder Seite doppelt, d. h. gabelförmig vorgesehen und nehmen jeweils zwischen sich einen Haken 86 der Verriegelungsvorrichtung 52 schwenkbar auf. Jeder der Haken 86 ist zweischenklig als Winkel ausgebildet und hat eine Hakennase 88 einenends und einen Mitnehmer 90 anderenends, während er in dem Kreuzungspunkt beider Schenkel eine Öffnung zur Aufnahme eines durch die dritten Laschen 50 gesteckten Stifts aufweist, der die Schwenkbewegung ermöglicht. Im Bereich dieses Mitnehmers 90 ist ein Ende einer Schraubenzugfeder 92 befestigt, während deren anderes Ende auf der dritten Lasche 50 gehalten wird. Auf diese Weise wird der Mitnehmer 90 stets an dem Bolzen 76 zur Anlage gebracht und entgegen der Kraft der Schraubenzugfeder 92 mit Blick auf Figur 2 im Uhrzeigerdrehsinn verschwenkt, wenn der Bolzen 76 in der Langlochführung 78 von dem sich einklappenden Gestänge 20 zu der Konsole 24 hingezogen wird. Die Hakennase 88 ist derart angeordnet und bemessen, daß sie bei einer Anlage beider Teile 12, 14 der Vorrichtung 10 an dem zweiten Teil 14 vorgesehene U-förmige Bügel 94 hintergreift und somit beide Teile 12, 14 fest miteinander verbindet.

Dies bedeutet, daß am Ende der Schubbewegung des ersten auf dem zweiten Teil 12, 14 die Haken 86 beide Teile 12, 14 miteinander verriegeln, während zum Trennen beider Teile 12, 14 zunächst das Gestänge 20 eingefaltet, d. h. radial nach außen bewegt wird, und dabei der Bolzen 76 in der Langlochführung 78 gleitet und den Haken 86 in eine entriegelnde Stellung schwenkt.

Der Kontaktschalter 44 erfaßt und zeigt an, wenn beide Teile 12, 14 vollkommen aneinander anliegen, was durch das Niederdrücken des Stößels 46 erkannt wird.

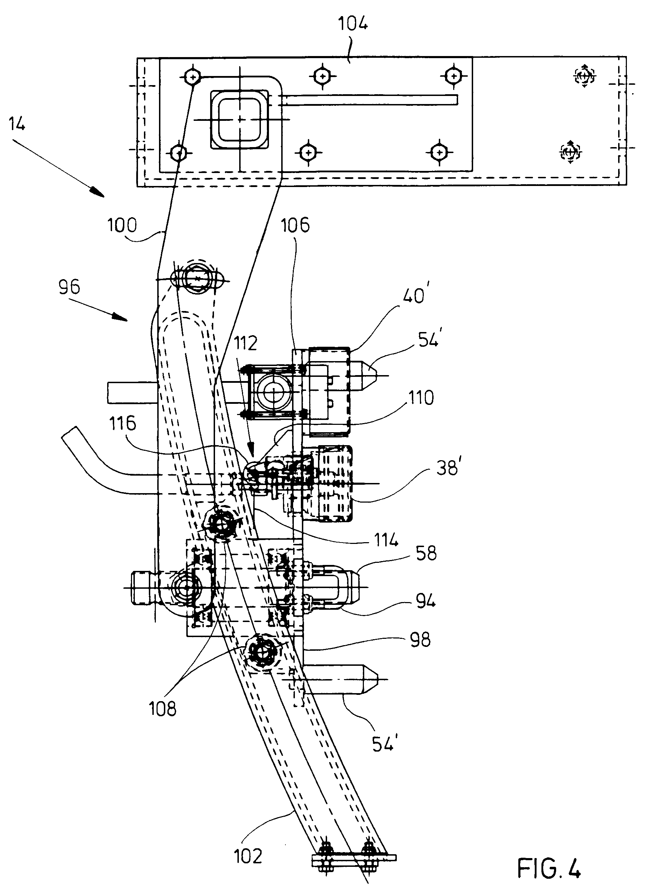

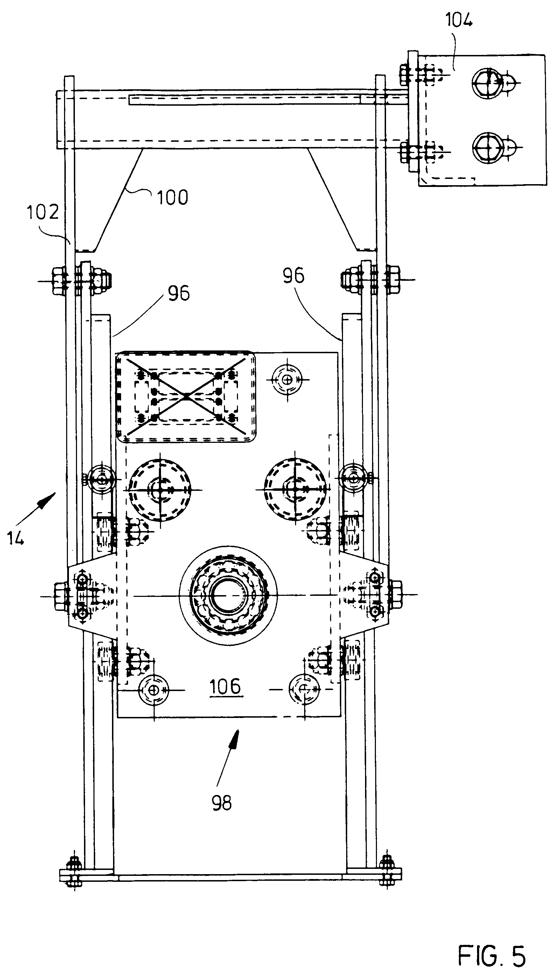

Im folgenden wird Bezug genommen auf das in den Figuren 4 und 5 Gezeigte, das sich auf den zweiten Teil 14 der Vorrichtung 10 bezieht, der an den bisher beschriebenen ersten Teil 12 angeschlossen werden kann.

Der zweite Teil 14 enthält in diesem speziellen Ausführungsbeispiel eine Führungsbahn 96 und eine Kupplungshälfte 98.

Die Führungsbahn 96 ist für den Fall vorgesehen, daß die Vorrichtung 10 dort verwendet wird, wo sich die Ausrüstung um einen Schwenkpunkt gegenüber der Maschine verstellen kann, so daß sie sich auf einem Kreisbogen um diesen Schwenkpunkt erstreckt. Ein derartiger Anwendungsfall liegt z. B. bei einem Mähdrescher vor, dessen Schneidwerk entweder für einen Hangausgleich oder zur Anpassung an Bodenunebenheiten vertikal pendelnd an einem Schrägförderer befestigt ist.

Wird die Ausrüstung, z. B. ein Schneidwerk, hingegen starr an der Maschine angebracht, bedarf es der Führungsbahn 96 nicht, sondern die zweite Kupplungshälfte 98 wird fluchtend zu der ersten Kupplungshälfte 18 starr an der Ausrüstung angeschlossen.

Die Führungsbahn 96 ist in diesem Ausführungsbeispiel aus einem gabelförmig gestalteten Halter 100 und daran verstellbar angebrachten, auf einem Kreisbogen verlaufenden U-Schienen 102 zusammengesetzt. Der Halter 100 ist in einer Konsole 104 verschiebbar mittels Schrauben befestigt, wobei sich die Konsole 104 selbst an der nicht gezeigten Ausrüstung befindet.

Die U-Schienen 102 sind mit ihrem unteren Ende auf die Ausrüstung aufgeschraubt und mit ihrem oberen Ende in einem Langloch 106 an dem Halter 100 verstellbar festgelegt, so daß deren Neigung in begrenztem Maß verstellt werden kann. Die U-Schienen 102 sind so angeordnet, daß sie sich jeweils nach innen öffnen.

Anstatt der Führungsbahn 96 mit U-Schienen 102 könnte auch ein Gestänge mit Lenkern Anwendung finden, das die zweite Kupplungshälfte 98 auf einem Kreisbogen führt.

Die zweite Kupplungshälfte 98 weist eine zweite Platte 106 auf, in die komplementäre Hydraulikkupplungen 38', Elektrostecker 40' und Zentrierstifte 54' sowie der Stummel 58 derart aufgenommen sind, daß sie mit den entsprechenden Teilen auf der ersten Platte 34 fluchten und beim Zusammenführen beider Platten 34, 106 die jeweiligen Verbindungen herstellen. Die Hydraulikkupplungen 38', Elektrostecker 40' sowie der Stummel 58 führen über Leitungen bzw. Wellen, Riemen oder Ketten zu den jeweils anzutreibenden Aggregaten auf der Ausrüstung.

An der Vorderseite der zweiten Platte 106, d. h. an der der ersten Platte 34 zugelegenen Seite, befinden sich die beiden Bügel 94, die mit den Hakennasen 88 zusammenwirken können und entsprechend deren Anordnung ausgerichtet sind.

An der Rückseite der zweiten Platte 106 sind auf jeder Seite zwei Rollen 108 auf seitlichen Flanken 110 vorgesehen, die in den Räumen der U-Schienen 102 gleitend bzw. abrollend aufgenommen sind. Mittels dieser Rollen 108 kann die zweite Kupplungshälfte 98 in der Führungsbahn 96 auf einem Kreisbogen bewegt werden und somit stets mit der ersten Kupplungshälfte 18 verbunden bleiben.

Zum Festlegen der zweiten Kupplungshälfte 98 in einer definierten Stellung in der Führungsbahn 96, wenn sie von der ersten Kupplungshälfte 18 getrennt ist, sind Rastmittel 112 vorgesehen, die sich aus einer Rastnase 114 und einem federbelasteten Halteelement 116 zusammensetzen. Die Rastnase 114 ist auf der Vorderseite der U-Schienen 102 auf deren jeweiligen Steg vorgesehen und weist insbesondere an ihrer Oberseite eine Schräge auf, die es der zweiten Kupplungshälfte 98 nicht erlaubt, nur aufgrund ihres Gewichts das Halteelement 116 so weit zurück zu schieben, daß sie diese Position überfahren kann. Das federbelastete Halteelement 116 besteht aus einer Rolle, die unter Federkraft verstellt wird.

Es wird davon ausgegangen, daß sich die zweite Kupplungshälfte 98 mit dem Halteelement 116 oberhalb und auf der Rastnase 114 befindet, wenn die beiden Kupplungshälften 98 und 18 voneinander getrennt werden und somit beim Zusammenfügen eine genau definierte Stellung zueinander einnehmen. Sollte dies nicht der Fall sein, kann die zweite Kupplungshälfte 98 von Hand nach oben über die Rastnase 114 bewegt und auf diese aufgesetzt werden, um diese Neutral-Stellung einzunehmen.

Die beiden Hälften der Hydraulikkupplungen 38, 38' werden aus handelsüblichen Steckkupplungen mit flacher Stirnfläche und einer Hülse gewonnen, mit deren Hilfe in einer ersten Stellung Rastkugeln in einer Haltenut arretiert oder in einer zweiten Stellung freigegeben werden können. Damit beim Zusammenfügen beider Hälften das Verschieben der Hülse entfallen kann, wird die Hülse selbst befestigt, so daß sich deren Innenteil beim Einschieben des Steckers verschiebt und den Eintritt in die Steckdose freigibt.

Auf die Hydraulikkupplungen 38 und die Elektrostecker 40 können bekannte und vorzugsweise geschlitzte Gummiabdeckkappen aufgeschoben werden, um den Eintritt bzw. das Anhaften von Schmutz und Wasser zu verhindern bzw. zu erschweren.

Nach alledem funktioniert die Vorrichtung 10 bzw. der Ankuppelvorgang wie folgt.

Es wird davon ausgegangen, daß sich die zweite Kupplungshälfte 98 in fluchtender Beziehung/Stellung zu der ersten Kupplungshälfte 18 befindet und somit auf den Rastnasen 114 aufsitzt. Sollte dies nicht der Fall sein, ist wie vorstehend beschrieben zu verfahren und die zweite Kupplungshälfte 98 entsprechend zu positionieren.

Zum Verbinden beider Teile 12, 14 bzw. deren Kupplungshälften 18, 98 wird zunächst die Ausrüstung an die Maschine angebaut, z. B. angehängt und mit dieser verbunden, insbesondere verriegelt, so daß deren relative Stellung zueinander unveränderbar ist und die vom Gewicht ausgehende Last übertragen werden kann.

Zu diesem Zeitpunkt müssen alle zu verbindenden Teile beider Kupplungshälften 18, 98 miteinander fluchten und zwangfrei miteinander in Eingriff zu bringen sein. Sollte dies ausnahmsweise nicht der Fall sein, ist durch eine Lageveränderung der Konsolen 24, 104 oder der U-Schienen 102 eine exakte Positionierung herzustellen und dauerhaft zu gewährleisten.

Anschließend wird der Motor 22 ausgefahren und damit das Gestänge 20 gespreizt, so daß die erste Kupplungshälfte 18 mit ihrem Rohr 36 auf dem Rohr 26 zu der zweiten Kupplungshälfte 98 hin gleitet. Zuerst werden die Zentrierstifte 54' in die Zentrierbüchsen 54 eintreten und beide Kupplungshälften 18, 98 exakt aufeinander ausrichten. Danach werden die Hydraulikkupplungen 38, 38', die Elektrostecker 40, 40' und die Welle 40 sowie der Stummel 58 zusammengefügt und erbringen eine zuverlässige Verbindung. Schließlich greifen die Haken 86 mit ihren Hakennasen 88 hinter die U-Bügel 94 und halten beide Kupplungshälften 18, 98 aneinander. Zu diesem Zeitpunkt wird auch der Stößel 46 des Kontaktschalters 44 ausreichend weit niedergedrückt und gibt einer Steuereinheit oder einer Anzeigevorrichtung ein Signal zum mittelbaren oder unmittelbaren Beenden des Ausfahrens des Motors 22. Wenn beide Kupplungshälften 18, 98 aneinander anliegen, wurde über die Strebe 80, die Stange 82 und den Stellhebel 84 auch das Ventil 32 auf Durchgang geschaltet, so daß Druckmittel durch die Hydraulikkupplungen 38, 38' strömen kann.

Zum Trennen beider Kupplungshälften 18, 98 wird der Motor 22 auf "Einfahren" geschaltet und zieht somit den Hebel 66 zurück. Während dieser Bewegung gleiten zunächst die Bolzen 76 in der Langlochführung 78 und gelangen gegen die Mitnehmer 90 der Haken 86 und verschwenken diese im Uhrzeigerdrehsinn, so daß die Hakennasen 88 die U-Bügel 94 freigeben. Im weiteren Verlauf zieht die Strebe 80 die Stange 82 und den Stellhebel 84 nach oben, um das Ventil 32 zu schließen, so daß die Hydraulikkupplungen 38, 38' drucklos werden. Danach wird der Motor 22 so lange entweder automatisch oder manuell betätigt, bis beide Kupplungshälften 18, 98 vollkommen getrennt sind, d. h. bis die erste Kupplungshälfte 18 ganz oder nahezu ganz mit ihrem Rohr 36 an der Konsole 24 anschlägt. Schließlich kann die Ausrüstung von der Maschine entriegelt und getrennt werden.

Der soweit beschriebene An- und Abkupplungsvorgang ermöglicht insbesondere mit einer ebenfalls fernsteuerbaren und insbesondere automatischen Aufnahme und Sicherung der Ausrüstung auf der Maschine deren Verbindung, ohne daß eine Bedienungsperson unmittelbar Hand anlegen müßte. Das An- und Abbauen eines Erntevorsatzes, z. B. eines Schneidwerks an einen Mähdrescher kann somit ferngesteuert und bei Verwendung eines Steuerprogramms automatisiert ausgeführt werden.

Entgegen der oben geschilderten Funktion des Ventils 32 kann dieses auch derart verwendet und in den Hydraulikkreislauf eingefügt werden, daß es nicht die Druckmittelzufuhr zu den Hydraulikkupplungen 38, 38' steuert, sondern einen weiteren Hydraulikzylinder im Sinne einer Arretierung beaufschlagt, sobald der Kuppelvorgang beendet ist. Auf diese Weise wird sichergestellt, daß sich die Ausrüstung nicht von der Maschine löst, sondern von dem Hydraulikzylinder direkt oder indirekt gehalten wird.

## Patentansprüche

1. Vorrichtung (10) zum Anschluß einer Ausrüstung an eine Maschine, insbesondere eines Erntevorsatzes an eine Erntemaschine, mit einer eine erste und eine zweite Kupplungshälfte (18, 98) enthaltenden Antriebsverbindung für jeweils zusammengehörige elektrische, hydraulische, pneumatische und/oder mechanische Anschlüsse (38, 40), und einer Arretiervorrichtung zur Halterung der Ausrüstung an der Maschine, dadurch gekennzeichnet, daß die Antriebsverbindung getrennt von der Arretiervorrichtung ausgebildet und betreibbar ist und die erste Kupplungshälfte (18) von einem Träger (16) linear beweglich und drehfest getragen und an die andere, zweite Kupplungshälfte (98) zur Anlage bringbar ist, wobei die Kupplungshälften (18, 98) mittels Ausrichtmitteln (54, 54') zusammengeführt werden.

2. Vorrichtung zum Anschluß einer Ausrüstung an eine Maschine mit einer eine erste und eine zweite Kupplungshälfte (18, 98) enthaltenden Antriebsverbindung für jeweils zusammengehörige elektrische, hydraulische, pneumatische und/oder mechanische Anschlüsse (38, 40), und einer Arretiervorrichtung zur Halterung der Ausrüstung an der Maschine, dadurch gekennzeichnet, daß die Antriebsverbindung an der Maschine und an der zweiten Kupplungshälfte (98) jeweils eine Welle, Hülse oder Stummel enthält, die über eine von einem Träger (16) getragene, linear bewegliche hohle Welle (42) miteinander in Eingriff bringbar sind.

3. Vorrichtung nach Anspruch 1 oder 2, dadurch gekennzeichnet, daß die erste Kupplungshälfte (18) ein Rohr (36) aufweist und in oder auf einem zweiten an dem Träger befestigten Rohr (26) teleskopisch gelagert ist.

4. Vorrichtung nach Anspruch 3, dadurch gekennzeichnet, daß in dem Rohr (36) der ersten Kupplungshälfte (18) eine Welle (42) mittels eines Gleit- oder Rollenlagers drehbar aufgenommen ist.

5. Vorrichtung nach einem oder mehreren der vorherigen Ansprüche, dadurch gekennzeichnet, daß die Ausrichtmittel (54) in der Art von wenigstens einem Zentrierstift (54') und einer Zentrierbuchse (54) ausgestaltet sind.

6. Vorrichtung nach einem oder mehreren der vorherigen Ansprüche, dadurch gekennzeichnet, daß die erste Kupplungshälfte (18) mittels eines Motors (22) verstellbar ist.

7. Vorrichtung nach einem oder mehreren der vorherigen Ansprüche, insbesondere nach Anspruch 5, dadurch gekennzeichnet, daß die erste Kupplungshälfte (18) über ein Gestänge (20) in der Art eines Hebel- oder eines Scherenhubgestänges bewegt wird.

8. Vorrichtung nach einem oder mehreren der vorherigen Ansprüche, insbesondere nach Anspruch 5, dadurch gekennzeichnet, daß die erste Kupplungshälfte (18) einen Zylinder und einen Hydraulikmotor enthält, dessen Kolben das Rohr zur teleskopischen Führung bildet.

9. Vorrichtung nach einem oder mehreren der vorherigen Ansprüche, dadurch gekennzeichnet, daß ein von der Bewegung der ersten Kupplungshälfte (18) gesteuertes Verbindungsmittel (82) vorgesehen ist, das auf einen Schalter oder ein Ventil (32) in dem System der Anschlüsse wirkt.

10. Vorrichtung nach einem oder mehreren der vorherigen Ansprüche, dadurch gekennzeichnet, daß zur Verbindung beider Kupplungshälften (18, 98) wenigstens eine Verriegelungsvorrichtung (52) vorgesehen ist.

11. Vorrichtung nach einem oder mehreren der vorherigen Ansprüche, dadurch gekennzeichnet, daß die Verriegelungsvorrichtung (52) abhängig von der Bewegung der ersten Kupplungshälfte (18) gesteuert wird.

12. Vorrichtung nach einem oder mehreren der vorherigen Ansprüche, dadurch gekennzeichnet, daß die Verriegelungsvorrichtung (52) wenigstens einen beweglichen Haken (86) an einer der Kupplungshälften (18, 98) enthält, der in eine einen Bügel (94) an der jeweils anderen Kupplungshälfte (98, 18) hintergreifende Stellung bringbar ist.

13. Vorrichtung nach einem oder mehreren der vorherigen Ansprüche, dadurch gekennzeichnet, daß die zweite Kupplungshälfte (98) auf einem Kreisbogen beweglich geführt ist.

14. Vorrichtung nach Anspruch 13, dadurch gekennzeichnet, daß die Führung in einer Kurvenbahn erfolgt.

15. Vorrichtung nach einem oder mehreren der Ansprüche 13 oder 14, dadurch gekennzeichnet, daß auf einer Stelle des Kreisbogens, insbesondere in der Weghälfte, ein Rastmittel (112) vorgesehen ist, auf dem die zweite Kupplungshälfte (98) in einem ausgekuppelten Zustand aufsitzt.

16. Vorrichtung nach Anspruch 15, dadurch gekennzeichnet, daß die zweite Kupplungshälfte (98) ein insbesondere federbelastetes Haltelement (116) enthält, das unter einer von außen einwirkenden Kraft beim Passieren des Rastmittels (112) in eine nicht haltende Stellung bringbar ist.

17. Vorrichtung nach einem oder mehreren der vorherigen Ansprüche, dadurch gekennzeichnet, daß die zweite Kupplungshälfte (98) und/oder die Führung auf dem Kreisbogen in der Kupplungsrichtung beider Kupplungshälften (18, 98) verstellbar ist.

18. Vorrichtung nach einem oder mehreren der vorherigen Ansprüche, dadurch gekennzeichnet, daß die Führung auf dem Kreisbogen im Radius oder in ihrer räumlichen Lage veränderbar ist.
